(19) **Europäisches Patentamt / European Patent Office / Office européen des brevets**

(11) **EP 4 306 935 B1**

(12) ## FASCICULE DE BREVET EUROPEEN

(45) Date de publication et mention de la délivrance du brevet:
**21.05.2025 Bulletin 2025/21**

(21) Numéro de dépôt: **23306203.3**

(22) Date de dépôt: **13.07.2023**

(51) Classification Internationale des Brevets (IPC):
**G01N 21/3563** *(2014.01)* **G01N 21/84** *(2006.01)*
**B09B 3/70** *(2022.01)* **B09B 101/90** *(2022.01)*

(52) Classification Coopérative des Brevets (CPC):
**G01N 21/3563; B09B 3/70;** B09B 2101/90

(54) **DETERMINATION DU POTENTIEL ACIDIFIANT PAR SPECTROMETRIE INFRAROUGE DANS LES SOLS NATURELS ET LES MATERIAUX D'EXCAVATION**

BESTIMMUNG DES SÄUREPOTENTIALS DURCH INFRAROTSPEKTROMETRIE IN NATÜRLICHEN BÖDEN UND BAGGERMATERIALIEN

DETERMINATION OF ACIDIFYING POTENTIAL BY INFRARED SPECTROMETRY IN NATURAL SOILS AND EXCAVATION MATERIALS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **15.07.2022 FR 2207289**

(43) Date de publication de la demande:
**17.01.2024 Bulletin 2024/03**

(73) Titulaire: **Eiffage GC Infra Linéaires**
**78140 Vélizy-Villacoublay (FR)**

(72) Inventeurs:
• **BOULANGE, Laurence**
**38530 CHAPAREILLAN (FR)**
• **DOOM, Florian**
**77144 MONTÉVRAIN (FR)**

(74) Mandataire: **Plasseraud IP**
**104 Rue de Richelieu**
**CS92104**
**75080 Paris Cedex 02 (FR)**

(56) Documents cités:
**DE-A1- 3 533 173 FR-A1- 3 118 590**

• **LINKER R ET AL: "Soil identification and chemometrics for direct determination of nitrate in soils using FTIR-ATR mid-infrared spectroscopy", CHEMOSPHERE, PERGAMON PRESS, OXFORD, GB, vol. 61, no. 5, 26 April 2005 (2005-04-26), pages 652 - 658, XP027614997, ISSN: 0045-6535, [retrieved on 20051101]**
• **WEN C S ET AL: "Exploratory experiments on pyrite removal from oil shale by an electrolytic process", FUEL, IPC SIENCE AND TECHNOLOGY PRESS , GUILDFORD, GB, vol. 55, no. 1, January 1976 (1976-01-01), pages 75 - 78, XP025457854, ISSN: 0016-2361, [retrieved on 19760101], DOI: 10.1016/0016-2361(76)90074-0**
• **CAMERO-HERMOZA P ET AL: "Pyrite Flotation Separation and Encapsulation: A Synchronized Remediation System for Tailings Dams", MINE WATER AND THE ENVIRONMENT, vol. 40, no. 1, 28 January 2021 (2021-01-28), pages 74 - 82, XP037406359, ISSN: 1025-9112, DOI: 10.1007/ S10230-021-00753-7**

EP 4 306 935 B1

**Description**

**Domaine technique**

La présente divulgation relève du domaine de la caractérisation des sols naturels et des matériaux d'excavation, en particulier extraits par tunnelier, pour déterminer leur potentiel d'acidifiant et les neutraliser

**Technique antérieure**

Lors de toute construction sur ou dans le sol, en particulier lors du creusement de tunnel, l'aménagement du sol se fait par excavation. Sont alors extraites des quantités de matériau d'excavation qui dépendent de l'ampleur et du type de travaux. Typiquement, un tunnelier utilisé pour excaver un tunnel lors de la construction d'une ligne de métro produit environ 800 tonnes par jour de matériaux d'excavation.

Les matériaux d'excavation ainsi extraits contiennent des espèces chimiques variées. Certaines espèces chimiques proviennent de la composition de la roche ou du sable, on parle alors de matrice. D'autres espèces chimiques sont présentes en moins grande quantité, on parle alors de traces. Lorsque les traces présentent une toxicité, on les appelle polluants. Il existe une pollution endogène, provenant de l'environnement géologique du prélèvement, et une pollution liée à l'activité humaine locale, en surface. Ces espèces chimiques peuvent représenter un risque pour l'environnement lorsque les matériaux d'excavation sont stockés après avoir été extraits. Avant de stocker ces matériaux d'excavation, il est donc nécessaire de déterminer leur taux de contamination. La détermination de ce taux de contamination permet d'orienter les matériaux dans l'une des trois filières de traitement existantes. Ces trois filières de traitement sont les suivantes :

1) Les matériaux inertes sont stockés afin d'être valorisés,

2) Les matériaux faiblement contaminés sont stockés dans des décharges spécialisées (dont le sous-sol ne permet pas d'écoulement dans des nappes phréatiques),

3) Les matériaux contaminés sont envoyés en filière de valorisation pour récupérer les éléments polluants.

La sélection de la filière de traitement adaptée dépend de la concentration massique en polluant dans les matériaux d'excavation et du pH d'un lixiviat obtenu à partir du matériau d'excavation. Les valeurs seuils de concentration massique limite en polluant à respecter sont fixées par des textes législatifs. En France, il s'agit de la Décision n °2003/33/CE du 19.12.2002 établissant des critères et des procédures d'admission des déchets dans les décharges et des arrêtés du 30.12.2002 relatif au stockage de déchets dangereux et du 12.12.2014 relatif aux conditions d'admission des déchets inertes [...]. Selon cette Décision et ces arrêtés, les valeurs limites de concentration massique de chacun des éléments polluants inorganiques à détecter sont parmi les plus exigeantes en Europe. Comme indiqué dans la Tableau 1 ci-dessous, ces valeurs limites sont très faibles et très dispersées (de 0,01 à 800 mg d'éléments polluants inorganiques pour 1 kg de matière sèche).

[Tableau 1]

| Récapitulatif des polluants à détecter en lixiviation et leur valeur limite de concentration massique | | | |
|---|---|---|---|
| Eléments polluants inorganiques à détecter | Valeur limite I.S.D.I.* | Valeur limite I.S.D.N.D.** | Valeur limite I.S.D.D.*** |
| | Concentration massique en mg/kg de matière sèche | | |
| Antimoine (Sb) | 0,06 | 0,7 | 5 |
| Arsenic (As) | 0,5 | 2 | 25 |
| Baryum (Ba) | 20 | 100 | 300 |
| Cadmium (Cd) | 0,04 | 1 | 5 |
| Chrome (Cr) total | 0,5 | 10 | 70 |
| Cuivre (Cu) | 2 | 50 | 100 |
| Mercure (Hg) | 0,01 | 0,2 | 2 |
| Molybdène (Mo) | 0,5 | 10 | 30 |
| Nickel (Ni) | 0,4 | 10 | 40 |
| Plomb (Pb) | 0,5 | 10 | 50 |

(suite)

| Récapitulatif des polluants à détecter en lixiviation et leur valeur limite de concentration massique | | | |
|---|---|---|---|
| Eléments polluants inorganiques à détecter | Valeur limite I.S.D.I.* | Valeur limite I.S.D.N.D.** | Valeur limite I.S.D.D.*** |
| | Concentration massique en mg/kg de matière sèche | | |
| Sélénium (Se) | 0,1 | 0,5 | 7 |
| Zinc (Zn) | 4 | 50 | 200 |
| Chlore (sous forme de chlorures Cl-) | 800 | 1500 | 25000 |
| Fluor (sous forme de fluorure F-) | 10 | 150 | 500 |
| Soufre (sous forme de sulfate SO42-) | 1000 | 20000 | 50000 |
| I.S.D.I. : Installation de Stockage de Déchets Inertes<br>I.S.D.N.D : Installation de Stockage de Déchets non Dangereux<br>I.S.D.D : Installation de Stockage de Déchets Dangereux<br>* Annexe II de l'arrêté du 12.12.2014<br>** Décision n°2003/33/CE du 19.12.2002<br>*** Annexe I de l'arrêté du 30.12.2002 | | | |

Les valeurs de pH sont présentées dans le Tableau 2 ci-dessous.

[Tableau 2]

| Valeur de pH à détecter en lixiviation | | | |
|---|---|---|---|
| | Valeur limite I.S.D.I.* | Valeur limite I.S.D.N.D.** | Valeur limite I.S.D.D.*** |
| pH | 7,5 < pH < 8,0 | 7,5 < pH < 8,0 | 7,5 < pH < 9,5 |
| I.S.D.I. : Installation de Stockage de Déchets Inertes<br>I.S.D.N.D : Installation de Stockage de Déchets non Dangereux<br>I.S.D.D : Installation de Stockage de Déchets Dangereux<br>* Annexe II de l'arrêté du 12.12.2014<br>** Décision n°2003/33/CE du 19.12.2002<br>*** Annexe I de l'arrêté du 30.12.2002 | | | |

Si l'intervalle de pH entre 7,5 et 8,0 est respecté et la concentration massique de chaque élément polluant inorganique/organique contenu dans le matériau d'excavation est inférieure à la valeur limite I.S.D.I. indiquée dans le Tableau 1, alors le matériau d'excavation est considéré comme inerte. Il peut alors être stocké dans des installations de stockage de déchets inertes afin d'être valorisé, par exemple en tant que matériau de construction ou pour la valorisation paysagère.

Si l'intervalle de pH entre 7,5 et 8,0 est respecté et la concentration massique d'au moins un des éléments polluants inorganiques contenu dans le matériau d'excavation est comprise entre les valeurs limites I.S.D.I et I.S.D.N.D. indiquées dans le Tableau 1, alors le matériau d'excavation est considéré comme faiblement contaminé. Il peut alors être stocké dans des installations de stockage de déchets non dangereux.

Si l'intervalle de pH entre 7,5 et 9,5 en cas de neutralisation alcaline, est respecté et la concentration massique d'au moins un des éléments polluants inorganiques contenu dans le matériau d'excavation est comprise entre les valeurs limites I.S.D.N.D. et I.S.D.D. indiquées dans le Tableau 1, alors le matériau d'excavation est considéré comme contaminé. Il est alors stocké dans des installations de stockage de déchets dangereux. Il peut y être décontaminé pour récupérer et valoriser les éléments polluants inorganiques.

Si la concentration massique d'au moins un des éléments polluants inorganiques contenu dans le matériau d'excavation est supérieure à la valeur limite I.S.D.D. indiquée dans le Tableau 1, alors le matériau d'excavation est considéré comme fortement contaminé. Il est alors stocké dans des installations spécifiquement dédiées à sa décontamination, à la récupération et la valorisation des éléments polluants inorganiques.

La procédure pour déterminer la concentration massique des éléments polluants inorganiques dans les boues d'excavation est fixée par des normes nationales. En France, il s'agit des normes françaises NF EN 12457-2 (1er décembre 2002) et NF EN 16192 (1er mars 2020). Selon ces normes, la quantité de polluant dans une boue d'excavation est déterminée par une analyse physicochimique de la composition du lixiviat obtenu à l'issue d'une lixiviation simulée de ladite boue d'excavation. Selon ces normes françaises, une lixiviation (traitement par l'eau bien connu qui entraîne la dissolution des espèces solubles) de la boue d'excavation est simulée pendant 24 heures à température ambiante (20°C $\pm$ 5°C). Puis le lixiviat (liquide résiduel de la lixiviation) est analysé pour déterminer la concentration massique des éléments polluants inorganiques dans ledit lixiviat. Cette concentration massique est représentative de la concentration massique des éléments polluants inorganiques présents dans les boues d'excavation.

La pyrite de fer, de formule chimique $FeS_2$, est un composé chimique naturel des sols. Lors de l'excavation des matériaux issus des tunneliers, la pyrite de fer peut s'oxyder au contact de l'air et de l'eau pour former de l'acide sulfurique. Cette formation d'acide sulfurique est problématique car elle diminue le pH du lixiviat pouvant changer la classification d'un matériau d'excavation de "inerte" à "faiblement contaminé" voire "contaminé".

Pour corriger ce problème, il est possible de neutraliser le matériau d'excavation en y ajoutant un tampon de base faible, tel qu'un carbonate qui sont couramment et naturellement présents dans les matériaux d'excavation.

Pour que cette neutralisation soit efficace, il est nécessaire de quantifier précisément la concentration massique en pyrite de fer et la concentration massique en tampon de base faible du matériau d'excavation pour ensuite déterminer la quantité de tampon de base faible à ajouter au matériau d'excavation.

Actuellement, la norme NF EN 15875 (1er décembre 2011) définit les potentiels suivants :

AP : Potentiel de génération d'acide (exprimé en $H^+$ mol/kg),
NP : Potentiel de neutralisation (exprimé en $H^+$ mol/kg), et
NPR : Rapport de potentiel de neutralisation.

Ces potentiels peuvent être calculés selon les formules suivantes :

$$AP = \frac{4 \times 10}{M_{pyr}} \times w_{pyr} \ ,$$

$$NP = \frac{n \times 10}{M_{CO3}} \times w_{CO3} \ ,$$

$$NPR = \frac{NP}{AP}$$

où

$M_{pyr}$ est la masse molaire de la pyrite de fer (119 g/mol),
$w_{pyr}$ est la teneur massique en pourcentage en pyrite de fer dans le matériau d'excavation,
n est le nombre de mol de $H^+$ qui réagit avec l'ion carbonate, i.e. n = 2,
$M_{CO3}$ est la masse molaire de l'ion carbonate $CO_3^{2-}$, *i.e.* $M_{CO3}$ = 60 g/mol, et
$w_{CO3}$ est la teneur massique en pourcentage en ion carbonate dans le matériau d'excavation.

Seule la pyrite de fer est considérée pour calculer le potentiel de génération d'acide, AP, dans la formule ci-dessus. Cette hypothèse résulte du fait que la pyrite de fer est communément considérée comme l'espèce acidifiante principale dans la géologie grâce sa prédominance par rapport aux autres espèces acidifiantes et son effet extrêmement acidifiant.

De même, seul l'ion carbonate est considéré pour calculer le potentiel de neutralisation, NP, dans la formule ci-dessus. Cette hypothèse résulte du fait que les carbonates, minéraux caractérisés par l'ion carbonate $CO_3^{2-}$, sont communément considérés comme l'espèce basique principale dans la géologie grâce à leur prédominance par rapport aux autres espèces basiques.Actuellement, la teneur massique en pyrite de fer dans le matériau d'excavation est déterminée par spectrométrie à fluorescence à rayons X des lixiviats obtenus par extraction rapide EDGE du matériau d'excavation. La spectrométrie à fluorescence à rayons X permet de déterminer la teneur en sulfate dans le lixiviat. A partir de ces teneurs, il est possible de déterminer la teneur en pyrite de fer en considérant que tout le soufre du sulfate est présent sous forme de pyrite de fer dans le matériau d'excavation.

Cependant, la Demanderesse a noté que cette méthode de détermination n'est pas assez précise car les résultats sont obtenus avec un écart-type important. La Demanderesse est d'avis que l'imprécision de cette méthode est liée au fait :

- que le soufre peut être sous forme de gypse, d'anhydride, de matières organiques soufrées, de thyosulfates, de sulfites et/ou de sulfates dans le matériau d'excavation, et

- que ces formes ne peuvent être négligées même si elles sont largement minoritaires.

La méthode de détermination par spectrométrie à fluorescence à rayons X des lixiviats peut conduire à mésestimer la teneur en pyrite de fer et donc à traiter le matériau d'excavation avec une quantité erronée de tampon de base faible. Cela pose un problème écologique car la pyrite de fer peut former de l'acide sulfurique si la quantité de tampon incorporée au matériau d'excavation est trop faible. Cela pose un problème économique si la quantité de tampon incorporée au matériau d'excavation est trop élevée.

De plus, cette méthode d'analyse requière des équipements sensibles et complexes à manipuler qui ne peuvent être situés directement sur le chantier car ils sont incompatibles avec les activités d'un chantier (vibration, poussière). Le laboratoire comprenant ces équipements sensibles est donc généralement situé loin du chantier. Cette méthode d'analyse est donc longue, une dizaine de jours, et peut être compliquée à réaliser.

La demande FR 3 118 590 calcule le AP selon la formule suivante :

$$AP = 2 \times S_{ox}\% \times \frac{10}{32,06}.$$

Cette formule est équivalente à la formule indiquée ci-dessus.

Selon la demande FR 3 118 590, la concentration en soufre oxydable, $S_{ox}\%$, peut être déterminée à l'aide de la norme EN1744-1§11 de février 2014 ou de la norme EN1744-1§12 de février 2014.

Ces deux normes se basent sur l'hypothèse que le soufre dans les déblais ne se trouve que sous forme de sulfate ou de soufre oxydable, or le cycle du soufre contient plusieurs autres formes (référencées dans notre demande). Bien que minoritaires, ces autres formes existent et introduisent une incertitude sur la teneur calculée de soufre oxydable. Par conséquent, ces deux normes ne permettent pas de déterminer précisément la quantité de tampon de base faible à ajouter au matériau d'excavation pour le neutraliser.

Cette imprécision est d'autant plus importante que ces normes imposent, pour déterminer la concentration en soufre oxydable, $S_{ox}\%$, de nombreuses manipulations complexes et dangereuses à mettre en œuvre.

DE3533173A1 décrit l'utilisation de la spectroscopie infrarouge dans un procédé d'évaluation économique et de classification du charbon, du kérogène, du bitume et des asphaltes dans les roches sédimentaires.

Il existe donc un besoin d'une méthode de détermination de la teneur massique en pyrite de fer et en ion carbonate $CO_3^{2-}$ dans un matériau d'excavation qui soit précise, rapide et simple à réaliser.

Il est du mérite de la Demanderesse d'avoir mis au point une telle méthode de détermination.

**Résumé**

Il est proposé une méthode d'analyse d'un matériau d'excavation comprenant les étapes suivantes :

a) analyse par spectroscopie infrarouge d'un échantillon d'un matériau d'excavation dans une gamme de nombres d'onde comprise entre 4000 cm⁻¹ et 350 cm⁻¹, en particulier entre 1600 cm⁻¹ et 370 cm⁻¹, plus particulièrement entre 500 cm⁻¹ et 400 cm⁻¹ pour obtenir un spectre infrarouge,

b) détermination de la teneur massique en pyrite de fer dans ledit échantillon à partir du spectre infrarouge obtenu à l'étape a).

De façon avantageuse, l'étape a) de la méthode de la présente invention permet d'obtenir un spectre infrarouge pouvant comprendre une bande d'absorption vers 440 cm⁻¹ entre 450 cm-1 et 435 cm-1 qui est spécifique à la pyrite de fer. En déterminant l'aire de cette bande d'absorption et en la comparant à une courbe de calibration préalablement obtenue à partir de l'analyse par spectroscopie d'échantillons dont la teneur massique en pyrite de fer est connue, alors il est possible de déterminer précisément, et avec un écart-type faible voire nul, la teneur massique en pyrite de fer dans l'échantillon du matériau d'excavation.

La méthode d'analyse de la présente invention permet donc de déterminer avantageusement la teneur massique en pyrite de fer avec une précision supérieure à la méthode par spectrométrie à fluorescence à rayons X des lixiviats obtenus par extraction rapide EDGE du matériau d'excavation.

De plus, cette analyse est avantageusement rapide et simple à réaliser. En effet, les spectromètres infrarouge sont des appareils compacts et robustes qui peuvent être utilisés sur un chantier et qui peuvent réaliser l'étape a) d'analyse en quelques secondes.

En outre, la méthode d'analyse de la présente invention permet de déterminer rapidement, simplement et de façon précise, la teneur massique en ion carbonate présent dans le matériau d'excavation.

Il est alors possible de neutraliser, si besoin, le matériau d'excavation en ajoutant une quantité précise de tampon de base faible au matériau d'excavation.

Ainsi, il est également proposé une méthode de neutralisation d'un matériau d'excavation comprenant l'étape suivante :

d) ajout d'une quantité de tampon de base faible à un matériau d'excavation à neutraliser pour obtenir un matériau d'excavation neutralisé,

dans laquelle

la teneur massique en pyrite de fer du matériau d'excavation à neutraliser a été déterminée par la méthode d'analyse telle que définie ci-dessus,

la teneur massique en ion carbonate du matériau d'excavation à neutraliser a été déterminée par la méthode d'analyse telle que définie ci-dessus, et

la quantité de tampon de base faible ajouté au matériau d'excavation à neutraliser est ajustée

- par rapport à la teneur massique en pyrite de fer du matériau d'excavation à neutraliser,
- par rapport à la teneur massique en ion carbonate du matériau d'excavation à neutraliser, et
- de telle sorte que le rapport de potentiel de neutralisation, NPR, du matériau d'excavation neutralisé est égal à une valeur prédéterminée, par exemple 4.

De façon avantageuse, cette méthode de traitement est écologique et économique car met en œuvre la quantité adéquate de tampon de base faible.

**Brève description des dessins**

D'autres caractéristiques, détails et avantages apparaîtront à la lecture de la description détaillée ci-après, et à l'analyse des dessins annexés, sur lesquels :

**Fig. 1**

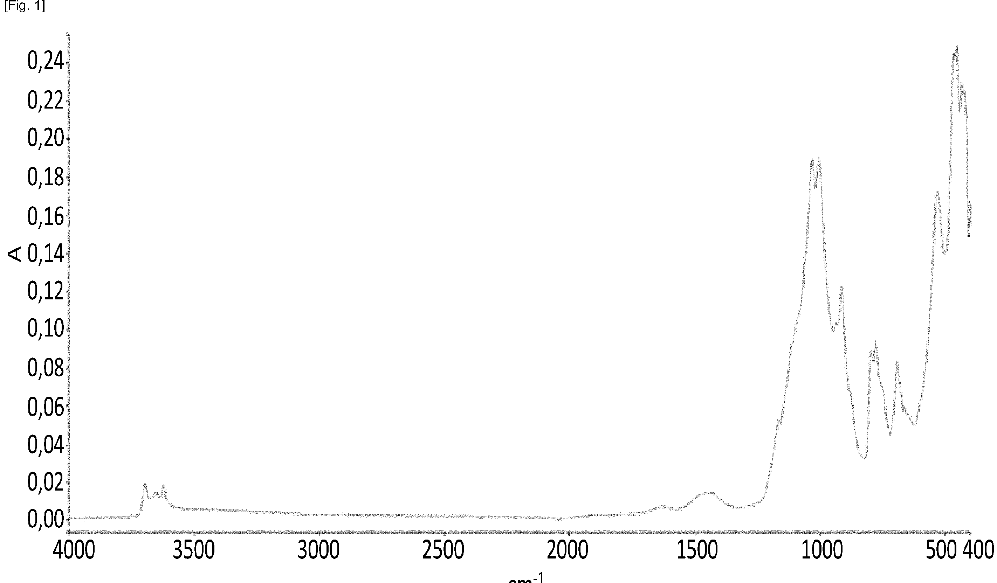

[Fig. 1] montre un spectre infrarouge d'un échantillon de matériau d'excavation subissant la méthode d'analyse selon l'invention.

**Fig. 2**

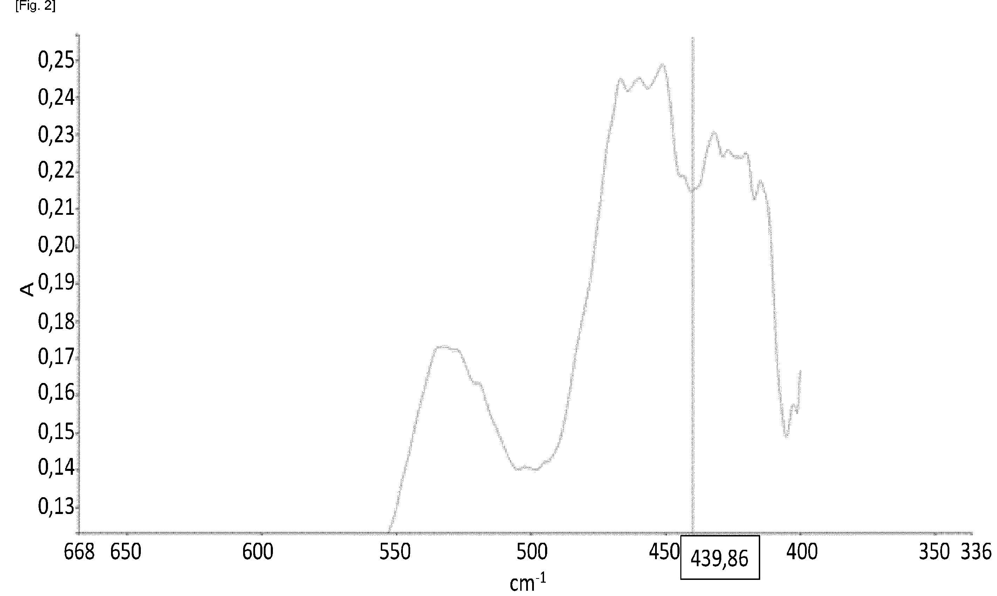

[Fig. 2] montre une partie du spectre infrarouge de la [Fig. 1].

**Description des modes de réalisation**

Selon un premier objet de l'invention, il est proposé une méthode d'analyse d'un matériau d'excavation comprenant les étapes suivantes :

a) analyse par spectroscopie infrarouge d'un échantillon d'un matériau d'excavation dans une gamme de nombres d'onde comprise entre 4000 $cm^{-1}$ et 350 $cm^{-1}$, en particulier entre 1600 $cm^{-1}$ et 370 $cm^{-1}$, plus particulièrement entre 500 $cm^{-1}$ et 400 $cm^{-1}$ pour obtenir un spectre infrarouge,

b) détermination de la teneur massique en pyrite de fer dans ledit échantillon à partir du spectre infrarouge obtenu à l'étape a).

Au sens de la présente demande, "spectroscopie infrarouge" désigne une technique d'analyse chimique reposant sur l'absorption de la lumière par la plupart des molécules dans la région de l'infrarouge du spectre électromagnétique et en convertissant cette absorption en vibration moléculaire. Cette absorption correspond spécifiquement aux liaisons présentes dans la molécule. Avec un spectromètre, cette absorption du rayonnement infrarouge par le matériau de l'échantillon est mesurée en fonction des nombres d'onde. Le résultat est un spectre infrarouge comprenant une ou des bandes d'absorption spécifique(s) aux molécules présentes dans l'échantillon analysé.

Au sens de la présente demande, "matériau d'excavation" désigne tout matériau excavé lors de travaux de génie civil ou de construction que ce soit à la surface de la Terre, par exemple lors de fouilles ou de création de fondation, ou dans le sous-sol, par exemple lors du creusement de tunnels, cavernes et galeries. Typiquement, le matériau d'excavation comprend des :

- roches meubles tels que graviers, sables, limons, argiles et leurs mélanges ;
- rochers concassés ;
- matériaux provenant de constructions antérieures ou de sites pollués tels que des décharges ; ou
- boues d'excavation.

Selon un mode de réalisation, le matériau d'excavation est une boue d'excavation.

Typiquement, la boue d'excavation peut être produite par un tunnelier excavant un tunnel lors de la construction d'une ligne de métro, d'une ligne de train, d'une route.

Selon un mode de réalisation particulier, la boue d'excavation est extraite du sous-sol parisien.

Le matériau d'excavation mis en œuvre dans l'étape a) peut présenter un taux de matière sèche, ou siccité, de 70% à 100%, en particulier de 75% à 90%, tout particulièrement de 78% à 82%.

Au sens de la présente demande, le "taux de matière sèche" est le rapport entre la masse sèche de matériau d'excavation et la masse du matériau d'excavation avant séchage, la masse sèche du matériau d'excavation étant mesurée après séchage d'environ 30 grammes de matériau d'excavation pendant 30 minutes à 145°C.

De façon avantageuse, mettre en œuvre un matériau d'excavation présentant un tel taux de matière sèche permet d'obtenir un spectre infrarouge dont la résolution permet l'identification rapide et facile de la bande d'absorption spécifique de la pyrite de fer.

Le séchage d'un matériau d'excavation est une étape classique connue de l'homme du métier. Il saura donc mettre en œuvre une étape de séchage du matériau d'excavation pour obtenir le taux de matière sèche décrit ci-dessus.

Le matériau d'excavation mis en œuvre dans l'étape a) peut présenter une granulométrie telle que 35% massique du matériau d'excavation présente un diamètre inférieur à 63 $\mu$m, en particulier 95% massique du matériau d'excavation présente un diamètre inférieur à 125 $\mu$m, tout particulièrement 100% massique du matériau d'excavation présente un diamètre inférieur à 200°$\mu$m.

De façon avantageuse, mettre en œuvre un matériau d'excavation présentant une telle granulométrie permet d'obtenir un spectre infrarouge dont la résolution permet l'identification rapide et facile de la bande d'absorption spécifique de la pyrite de fer.

La granulométrie du matériau d'excavation peut être déterminée par tamisage.

Cette granulométrie peut être obtenue par un broyage manuel ou un broyage automatique, en particulier un broyage manuel, plus particulièrement un broyage manuel dans un moule en agate. Le broyage manuel est avantageusement adapté à la disparité de dureté des composants du matériau d'excavation.

Selon l'invention, l'étape b) de la méthode d'analyse comprend les sous-étapes suivantes :

b1) détection entre 450 cm$^{-1}$ et 435 cm$^{-1}$ d'une bande d'absorption spécifique de la pyrite de fer dans le spectre infrarouge obtenu à l'étape a),
b2) intégration de la bande d'absorption détectée à l'étape b1) pour calculer une aire, et
b3) comparaison de l'aire obtenue à l'étape b2) avec une courbe de calibration pour déterminer la teneur massique en pyrite de fer du matériau d'excavation.

De façon avantageuse, la gamme de nombres d'onde de la sous-étape b1) permet de calculer, de façon reproductible et précise, l'aire de la bande d'absorption spécifique de la pyrite de fer lors de l'étape b2). A partir cette aire, il est ensuite possible de déterminer, de façon reproductible et précise, la teneur massique en pyrite de fer de l'échantillon du matériau d'excavation lors de l'étape b3).

Ces sous-étapes b1) à b3) peuvent permettre de déterminer rapidement, précisément et de façon reproductible, la teneur massique en pyrite de fer du matériau d'excavation.

La méthode d'analyse de la présente invention permet également de déterminer précisément la teneur massique en ion carbonate présent dans le matériau d'excavation.

Ainsi, la méthode d'analyse peut comprendre une étape c) de détermination de la teneur massique en ion carbonate dans ledit échantillon à partir du spectre infrarouge obtenu à l'étape a).

Par exemple, l'étape c) de la méthode de la présente invention peut comprendre les sous-étapes suivantes :

c1) détection entre 1550 cm$^{-1}$ et 1180 cm$^{-1}$ d'une bande d'absorption spécifique de l'ion carbonate dans le spectre infrarouge obtenu à l'étape a),
c2) intégration de la bande d'absorption détectée à l'étape c1) pour calculer une aire, et
c3) comparaison de l'aire obtenue à l'étape c2) avec une courbe de calibration pour déterminer la teneur massique en ion carbonate du matériau d'excavation.

De façon avantageuse, la gamme de nombres d'onde de la sous-étape c1) permet de calculer, de façon reproductible et précise, l'aire de la bande d'absorption spécifique de l'ion carbonate lors de l'étape c2). A partir de cette aire, il est ensuite possible de déterminer, de façon reproductible et précise, la teneur massique de l'ion carbonate du matériau d'excavation lors de l'étape c3).

Ces sous-étapes c1) à c3) peuvent donc permettre de déterminer rapidement, précisément et de façon reproductible, la teneur massique en ion carbonate du matériau d'excavation.

Grâce à la détermination précise de la teneur massique en pyrite de fer et de la teneur massique en ion carbonate du matériau d'excavation par la méthode d'analyse de la présente invention, il est possible de :

- calculer précisément le potentiel de génération d'acide du matériau d'excavation, AP,
- calculer précisément le potentiel de neutralisation du matériau d'excavation, NP, puis
- déterminer précisément la quantité de tampon de base faible à ajouter au matériau d'excavation à neutraliser pour que le rapport de potentiel de neutralisation, NPR, soit égal à une valeur prédéterminée.

Ainsi, selon un autre objet de l'invention, il est proposé une méthode de neutralisation d'un matériau d'excavation comprenant l'étape suivante :

d) ajout d'une quantité de tampon de base faible à un matériau d'excavation à neutraliser pour obtenir un matériau d'excavation neutralisé,

dans laquelle

la teneur massique en pyrite de fer du matériau d'excavation à neutraliser a été déterminée par la méthode d'analyse telle que définie ci-dessus,
la teneur massique en ion carbonate du matériau d'excavation à neutraliser a été déterminée par la méthode d'analyse telle que définie ci-dessus, et
la quantité de tampon de base faible ajouté au matériau d'excavation à neutraliser est ajustée

- par rapport à la teneur massique en pyrite de fer du matériau d'excavation à neutraliser,
- par rapport à la teneur massique en ion carbonate du matériau d'excavation à neutraliser, et
- de telle sorte que le rapport de potentiel de neutralisation, NPR, du matériau d'excavation neutralisé est égal à une valeur prédéterminée.

La valeur prédéterminée du NPR est déterminée de façon empirique et imposée par une réglementation nationale. Par exemple, en France, la valeur de 4 est recommandée par la norme NF EN 15875 (1er décembre 2011).

Typiquement, le tampon de base faible ajouté au matériau d'excavation à neutraliser peut être un hydroxyde, un carbonate, un carboxylate ou leurs mélanges.

Au sens de la présente demande, le terme "hydroxyde" désigne un composé comprenant un ou des ions hydroxyde $OH^-$. Par exemple l'hydroxyde peut être la soude ou la potasse.

Au sens de la présente demande, le terme "carboxylate" désigne un composé comprenant un ou des ions carboxylate $HCOO^-$.

Au sens de la présente demande, le terme "carbonate" désigne un composé comprenant un ou des ions carbonates $CO_3^{2-}$. Par exemple le carbonate peut être le carbonate de calcium, le carbonate de magnésium, le carbonate de potassium et leurs mélanges, tout particulièrement est le carbonate de calcium. De façon avantageuse, les carbonates de cette liste, en particulier le carbonate de calcium, sont présents majoritairement dans les matériaux d'excavation. De plus les carbonates de cette liste sont naturels et donc acceptés d'un point de vue réglementaire pour neutraliser un matériau d'excavation à neutraliser.

Selon la méthode de neutralisation de l'invention, la quantité de tampon de base faible à ajouter au matériau d'excavation à neutraliser vérifie la formule suivante :

$$m_{TBF} = w_{TBF} * m_{\text{matériau à neutraliser}}, \text{ avec } w_{TBF} = (AP * NPR - NP) * \frac{M_{TBF}}{n*10},$$

où

AP et NP sont tels que définis ci-dessus,
NPR est le rapport du potentiel de neutralisation du matériau d'excavation neutralisé,
$m_{\text{matériau à neutraliser}}$ est la masse du matériau à neutraliser,
$w_{TBF}$ est la teneur massique en tampon de base faible à ajouter au matériau d'excavation à neutraliser,
n est le nombre de mol de $H^+$ qui réagit avec le tampon de base faible, par exemple n = 2 pour le carbonate de calcium et n= 1 pour la potasse et pour la soude, et
$M_{TBF}$ est la masse molaire du tampon de base faible.

Selon un mode de réalisation très particulier, le tampon de base faible est le carbonate de calcium.

Selon ce mode de réalisation très particulier, la quantité de carbonate de calcium à ajouter au matériau d'excavation à neutraliser vérifie la formule suivante :

$$m_{\text{CaCO3}} = w_{\text{CaCO3}} * m_{\text{matériau à neutraliser}}, \text{ avec } w_{CaCO3} = (AP * NPR - NP) * \frac{M_{CaCO3}}{2*10},$$

où

AP et NP sont tels que définis ci-dessus,

NPR est le rapport du potentiel de neutralisation du matériau d'excavation neutralisé,

$m_{\text{matériau à neutraliser}}$ est la masse du matériau à neutraliser,

$w_{\text{CaCO3}}$ est la teneur massique en carbonate de calcium à ajouter au matériau d'excavation à neutraliser, et

$M_{\text{CaCO3}}$ est la masse molaire du carbonate de calcium, i.e. $M_{\text{CaCO3}} = 100$ g/mol.

Le matériau d'excavation neutralisé obtenu à l'issue de la méthode de neutralisation décrite ci-dessus peut être valorisé.

Ainsi, selon un autre objet de l'invention, il est proposé une méthode de valorisation d'un matériau d'excavation neutralisé selon la méthode de neutralisation telle que décrite ci-dessus comprenant une étape de valorisation dudit matériau d'excavation neutralisé en tant que matériau de construction.

Typiquement, le matériau de construction peut être un remblai ou un granulat, en particulier un remblai, un granulat pour béton ou un granulat pour enrobé.

Au sens de la présente demande, "remblai" désigne un matériau de construction destiné à élever un terrain, combler un creux ou combler les vides de l'exploitation minière.

Au sens de la présente demande, "granulat" désigne un matériau de construction utilisé pour la réalisation d'ouvrages de Génie Civil, de travaux routiers et de bâtiments.

Un granulat pour béton et un granulat pour enrobé sont des exemples de granulat.

Au sens de la présente demande, "granulat pour enrobé" désigne un granulat utilisé pour la confection des enrobés bitumineux.

Au sens de la présente demande, "granulat pour béton" désigne un granulat utilisé pour la confection des bétons.

L'étape de valorisation peut comprendre une étape de production d'un matériau de construction à partir du matériau inerté.

Typiquement l'étape de production peut comprendre une ou des sous-étapes de mise en forme du matériau inerté, la ou les sous-étapes étant adaptées au matériau de construction, en particulier au remblai ou au granulat, plus particulièrement au remblai, au granulat pour béton ou au granulat pour enrobé.

**Exemples**

Les exemples qui suivent permettent d'illustrer l'invention sans toutefois la limiter.

**Exemple 1 : matériau d'excavation issu du chantier du Grand Paris Express**

Exemple 1.1 : Détermination de la teneur massique en pyrite de fer et en ion carbonate d'un échantillon de matériau d'excavation.

Une masse connue (30 g) d'un échantillon du matériau d'excavation est séchée dans une étuve à 145°C pendant 30 minutes pour obtenir un échantillon séché présentant un taux de matière sèche de 100 %.

5 g de cet échantillon séché sont broyés à la main dans un mortier en agate, jusqu'à l'obtention d'une poudre visuellement homogène et impossible à réduire plus. Cette poudre est tamisée de sorte à récupérer un échantillon broyé présentant une granulométrie telle que 100% massique de l'échantillon présente un diamètre inférieur à 100 $\mu$m.

L'échantillon broyé est ensuite divisé en deux échantillons Ech1 et Ech2. Chaque échantillon Ech1 et Ech2 subit ensuite une analyse par spectroscopie infrarouge entre 4000 cm$^{-1}$ et 370 cm$^{-1}$. L'appareil pour réaliser cette analyse est un FT-IR SpectrumTwo de PerkinElmer, et les paramètres sont la gamme d'analyse entre 4000 cm$^{-1}$ et 400 cm$^{-1}$.

Les [Fig. 1] et [Fig. 2] présentent le spectre infrarouge obtenu pour l'échantillon Ech1. Le spectre obtenu pour l'échantillon Ech2 est similaire.

Le spectre infrarouge de la [Fig. 1] et de la [Fig. 2] comprend une bande d'absorption, sous forme d'un creux, autour de 440 cm$^{-1}$. Cette bande d'absorption est caractéristique de la pyrite de fer. Une aire est obtenue en intégrant la bande d'absorption entre 449 cm$^{-1}$ et 435 cm$^{-1}$. La comparaison de cette aire avec une courbe de calibration, préalablement établit et non montrée, permet de déterminer la teneur massique en pyrite de fer dans l'échantillon Ech1. Cette teneur est indiquée dans le Tableau 3 ci-dessous. La teneur massique en pyrite de fer dans l'échantillon Ech2 est déterminée de la même façon et est indiquée dans le Tableau 3 ci-dessous.

Ce spectre infrarouge ne comprend pas la bande d'absorption de l'ion carbonate autour de 1450 cm$^{-1}$. La teneur

massique en ion carbonate dans les échantillons Ech1 et Ech2 est donc nulle. Cette teneur est indiquée dans le Tableau 3 ci-dessous.

Le potentiel de génération d'acide (AP), le potentiel de neutralisation (NP), et le Rapport de potentiel de neutralisation (NPR) des deux échantillons Ech1 et Ech2 sont également indiqués dans le Tableau 3 ci-dessous.

[Tableau 3]

| Echantillon | Teneur massique en pyrite de fer (%) | Teneur massique en $CO_3^{2-}$ (%) | AP | NP | NPR |
|---|---|---|---|---|---|
| Ech1 | 7 | 0 | 2,35 | 0 | 0 |
| Ech2 | 7 | 0 | 2,35 | 0 | 0 |

Le Tableau 3 met en évidence que la méthode de la présente invention, qui met en œuvre une analyse par spectroscopie, permet de déterminer en quelques minutes la teneur en pyrite de fer dans le matériau d'excavation avec un écart-type nul.

Exemple 1.2 : Neutralisation du matériau d'excavation de l'Exemple 1.1.

Le matériau d'excavation est neutralisé par ajout de carbonate de calcium.

La quantité de carbonate de calcium ($CaCO_3$) à ajouter au matériau d'excavation est déterminée à partir des potentiels AP et NP indiqués dans le Tableau 3 ci-dessus de telle sorte que le potentiel NPR, i.e. le rapport NP/AP, du matériau d'excavation neutralisé soit égal à 4 en accord avec la norme NF EN 15875 (1er décembre 2011). Ainsi la quantité carbonate de calcium à ajouter au matériau d'excavation à neutraliser, $m_{CaCO3}$, est égale à $w_{CaCO3}$ * $m_{matériau\ à\ neutraliser}$, avec $w_{CaCO3} = (2,35 \times 4 - 0) \times \left(\frac{100}{2 \times 10}\right)$ *i. e.* 47 %.

**Exemple 2 : matériau d'excavation issu du chantier du Grand Paris Express**

Exemple 2.1 : Détermination de la teneur massique en pyrite de fer et en ion carbonate d'un échantillon de matériau d'excavation.

Un échantillon du matériau d'excavation subit le protocole de l'exemple 1.1, la différence étant qu'il n'est pas séparé en 2 échantillons Ech1 et Ech2.

Les teneurs massiques en pyrite de fer et en ion carbonate, le potentiel de génération d'acide (AP), le potentiel de neutralisation (NP), et le Rapport de potentiel de neutralisation (NPR) de l'échantillon sont indiqués dans le Tableau 4 ci-dessous.

[Tableau 4]

| Teneur massique en pyrite de fer (%) | Teneur massique en $CO_3^{2-}$ (%) | AP | NP | NPR |
|---|---|---|---|---|
| 4,3 | 11,3 | 1,45 | 3,77 | 2,60 |

Exemple 2.2 : Neutralisation du matériau d'excavation de l'Exemple 2.1.

Le matériau d'excavation est neutralisé par ajout de carbonate de calcium.

La quantité de carbonate de calcium ($CaCO_3$) à ajouter au matériau d'excavation est déterminée à partir des potentiels AP et NP indiqués dans le Tableau 4 ci-dessus de telle sorte que le potentiel NPR, i.e. le rapport NP/AP, du matériau d'excavation neutralisé soit égal à 4 en accord avec la norme NF EN 15875 (1er décembre 2011). Ainsi la quantité carbonate de calcium à ajouter au matériau d'excavation à neutraliser, $m_{CaCO3}$, est égale à $w_{CaCO3}$ * $m_{matériau\ à\ neutraliser}$, avec $w_{CaCO3} = (1,45 \times 4 - 3,77) \times \left(\frac{100}{2 \times 10}\right)$ *i. e.* 10,15 %.

**Revendications**

**1.** Méthode d'analyse d'un matériau d'excavation comprenant les étapes suivantes :

a) analyse par spectroscopie infrarouge d'un échantillon d'un matériau d'excavation dans une gamme de nombres d'onde comprise entre 4000 cm$^{-1}$ et 350 cm$^{-1}$ pour obtenir un spectre infrarouge,
b) détermination de la teneur massique en pyrite de fer dans ledit échantillon à partir du spectre infrarouge obtenu à l'étape a),

**caractérisée en ce que** l'étape b) comprend les sous-étapes suivantes :

b1) détection entre 450 cm$^{-1}$ et 435 cm$^{-1}$ d'une bande d'absorption spécifique de la pyrite de fer dans le spectre infrarouge obtenu à l'étape a),
b2) intégration de la bande d'absorption détectée à l'étape b1) pour calculer une aire, et
b3) comparaison de l'aire obtenue à l'étape b2) avec une courbe de calibration pour déterminer la teneur massique en pyrite de fer du matériau d'excavation.

2. Méthode selon la revendication 1 dans lequel le matériau d'excavation présente un taux de matière sèche de 70% à 100%.

3. Méthode selon la revendication 1 ou la revendication 2, comprenant en outre l'étape suivante :
c) détermination de la teneur massique en ion carbonate dans ledit échantillon à partir du spectre infrarouge obtenu à l'étape a).

4. Méthode selon la revendication 3 dans lequel l'étape c) comprend les sous-étapes suivantes:

c1) détection entre 1550 cm$^{-1}$ et 1180 cm$^{-1}$ d'une bande d'absorption spécifique de l'ion carbonate dans le spectre infrarouge obtenu à l'étape a),
c2) intégration de la bande d'absorption détectée à l'étape c1) pour calculer une aire, et
c3) comparaison de l'aire obtenue à l'étape c2) avec une courbe de calibration pour déterminer la teneur massique en ion carbonate du matériau d'excavation.

5. Méthode de neutralisation d'un matériau d'excavation comprenant l'étape suivante :
d) ajout d'une quantité de tampon de base faible à un matériau d'excavation à neutraliser pour obtenir un matériau d'excavation neutralisé,
dans laquelle

la teneur massique en pyrite de fer du matériau d'excavation à neutraliser a été déterminée par la méthode d'analyse telle que définie dans l'une quelconque des revendications 1 à 4,
la teneur massique en ion carbonate du matériau d'excavation à neutraliser a été déterminée par la méthode d'analyse telle que définie dans la revendication 3 ou la revendication 4, et
la quantité de tampon de base faible ajouté au matériau d'excavation à neutraliser est ajustée

- par rapport à la teneur massique en pyrite de fer du matériau d'excavation à neutraliser,
- par rapport à la teneur massique en ion carbonate du matériau d'excavation à neutraliser, et
- de telle sorte que le rapport de potentiel de neutralisation, NPR, du matériau d'excavation neutralisé est égal à une valeur prédéterminée.

6. Méthode selon la revendication 5 dans laquelle la valeur prédéterminée est égale à 4.

7. Méthode selon la revendication 5 ou la revendication 6 dans laquelle le tampon de base faible ajouté au matériau d'excavation à neutraliser est un hydroxyde, un carboxylate, un carbonate ou leurs mélanges.

8. Méthode selon l'une quelconque des revendication 5 à 7 dans laquelle le tampon de base faible ajouté au matériau d'excavation à neutraliser est le carbonate de calcium.

9. Méthode de valorisation d'un matériau d'excavation neutralisé selon la méthode de neutralisation telle que définie dans l'une quelconques des revendications 5 à 8 comprenant une étape de valorisation dudit matériau d'excavation neutralisé en tant que matériau de construction.

10. Méthode selon la revendication 9 dans lequel le matériau de construction est un remblai ou un granulat.

**Patentansprüche**

1. Verfahren zur Analyse von Aushubmaterial, das die folgenden Schritte umfasst:

   a) Analyse einer Probe eines Aushubmaterials mittels Infrarotspektroskopie in einem Wellenzahlbereich zwischen 4000 cm$^{-1}$ und 350 cm$^{-1}$, um ein Infrarotspektrum zu erhalten,
   b) Bestimmung des Massengehalts an Eisenpyrit in der Probe aus dem in Schritt a) erhaltenen Infrarotspektrum, **dadurch gekennzeichnet, dass** Schritt b) die folgenden Unterschritte umfasst:

   b1) Detektion eines für Eisenpyrit spezifischen Absorptionsbereichs im Infrarotspektrum, das in Schritt a) erhalten wurde, zwischen 450 cm$^{-1}$ und 435 cm$^{-1}$,
   b2) Integration des in Schritt b1) ermittelten Absorptionsbereichs zur Berechnung einer Fläche, und
   b3) Vergleich der in Schritt b2) erhaltenen Fläche mit einer Kalibrierungskurve zur Bestimmung des Massengehalts an Eisenpyrit im Aushubmaterial.

2. Verfahren nach Anspruch 1, wobei das Aushubmaterial einen Trockensubstanzgehalt von 70 % bis 100 % aufweist.

3. Verfahren nach Anspruch 1 oder Anspruch 2, welches ferner den folgenden Schritt umfasst:
   c) Bestimmung des Massengehalts an Carbonationen in der Probe anhand des in Schritt a) erhaltenen Infrarotspektrums.

4. Verfahren nach Anspruch 3, wobei Schritt c) die folgenden Teilschritte umfasst:

   c1) Detektion eines für das Carbonation spezifischen Absorptionsbereichs im Infrarotspektrum, das in Schritt a) erhalten wurde, zwischen 1550 cm$^{-1}$ und 1180 cm$^{-1}$,
   c2) Integration des in Schritt c1) ermittelten Absorptionsbereichs zur Berechnung einer Fläche, und
   c3) Vergleichen der in Schritt c2) erhaltenen Fläche mit einer Kalibrierungskurve, um den Massengehalt an Carbonationen im Aushubmaterial zu bestimmen.

5. Verfahren zur Neutralisierung von Aushubmaterial, welches den folgenden Schritt umfasst:
   d) Zugabe einer geringen Menge eines Basispuffers zu einem zu neutralisierenden Aushubmaterial, um ein neutralisiertes Aushubmaterial zu erhalten, wobei

   der Massengehalt an Eisenpyrith des zu neutralisierenden Aushubmaterials durch das in einem der Ansprüche 1 bis 4 definierte Analyseverfahren bestimmt wurde,
   der Massengehalt an Carbonationen des zu neutralisierenden Aushubmaterials durch das in Anspruch 3 oder Anspruch 4 definierte Analyseverfahren bestimmt wurde, und
   die Menge des dem zu neutralisierenden Aushubmaterial zugesetzten schwachen Basispuffers

   - in Bezug auf den Massengehalt an Eisenpyrith des zu neutralisierenden Aushubmaterials,
   - in Bezug auf den Massengehalt an Carbonationen des zu neutralisierenden Aushubmaterials,
   - so eingestellt wird, dass das Neutralisationspotentialverhältnis NPR des neutralisierten Aushubmaterials gleich einem vorbestimmten Wert ist.

6. Verfahren nach Anspruch 5, wobei der vorgegebene Wert 4 beträgt.

7. Verfahren nach Anspruch 5 oder Anspruch 6, wobei der dem zu neutralisierenden Aushubmaterial zugesetzte schwache Basispuffer ein Hydroxid, ein Carboxylat, ein Carbonat oder eine Mischung davon ist.

8. Verfahren nach einem der Ansprüche 5 bis 7, wobei der dem zu neutralisierenden Aushubmaterial zugesetzte schwache Basispuffer Calciumcarbonat ist.

9. Verfahren zur Verwertung eines neutralisierten Aushubmaterials gemäß dem in einem der Ansprüche 5 bis 8 definierten Neutralisierungsverfahren, umfassend einen Schritt der Verwertung des neutralisierten Aushubmaterials als Baumaterial.

10. Verfahren nach Anspruch 9, wobei das Baumaterial ein Füllmaterial oder ein Granulat ist.

**Claims**

1. Method of analysing an excavation material comprising the following steps:

   a) analysis by infrared spectroscopy of a sample of excavated material in a range of wavenumbers between 4000 cm $^{-1}$ and 350 cm $^{-1}$ to obtain an infrared spectrum,
   b) determining the mass content of iron pyrite in said sample from the infrared spectrum obtained in step a),

   **characterised in that** step b) comprises the following sub-steps:

   b1) detecting between 450 cm $^{-1}$ and 435 cm $^{-1}$ of a specific absorption band of iron pyrite in the infrared spectrum obtained in step a),
   b2) integrating the absorption band detected in step b1) to calculate an area, and
   b3) comparing the area obtained in step b2) with a calibration curve to determine the mass content of iron pyrite in the excavated material.

2. Method according to claim 1, wherein the excavation material has a dry matter content of 70% to 100%.

3. Method according to claim 1 or claim 2, further comprising the following step:
   c) determining the mass content of carbonate ion in said sample from the infrared spectrum obtained in step a).

4. Method according to claim 3, wherein step c) comprises the following sub-steps:

   c1) detecting between 1550 cm $^{-1}$ and 1180 cm $^{-1}$ of a specific absorption band of the carbonate ion in the infrared spectrum obtained in step a),
   c2) integrating the absorption band detected in step c1) to calculate an area, and
   c3) comparing the area obtained in step c2) with a calibration curve to determine the mass content of carbonate ion in the excavated material.

5. Method for neutralising an excavation material comprising the following step:
   d) adding an amount of weak base buffer to an excavation material to be neutralised to obtain a neutralised excavation material, wherein

   the mass content of iron pyrite in the excavation material to be neutralised was determined by the method of analysis as defined in any one of claims 1 to 4,
   the mass content of carbonate ion of the excavated material to be neutralised was determined by the method of analysis as defined in claim 3 or claim 4, and
   the amount of weak base buffer added to the excavated material to be neutralised is adjusted

   - in relation to the mass content of iron pyrite in the excavated material to be neutralised,
   - in relation to the mass content of carbonate ion in the excavated material to be neutralised, and
   - such that the neutralisation potential ratio, NPR, of the neutralised excavated material is equal to a predetermined value.

6. Method according to claim 5, wherein the predetermined value is equal to 4.

7. Method according to claim 5 or claim 6, wherein the weak base buffer added to the excavated material to be neutralised is a hydroxide, a carboxylate, a carbonate or mixtures thereof.

8. Method according to any one of claims 5 to 7, wherein the weak base buffer added to the excavation material to be neutralised is calcium carbonate.

9. Method of recovering a neutralised excavation material according to the neutralisation method as defined in any one of claims 5 to 8 comprising a step of recovering said neutralised excavation material as a construction material.

10. Method according to claim 9, wherein the construction material is a backfill or aggregate.

[Fig. 1]

EP 4 306 935 B1

[Fig. 2]

EP 4 306 935 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3118590

- DE 3533173 A1